# EUROPEAN PATENT APPLICATION

(11) **EP 1 681 574 A1**
(43) Date of publication of application: **19.07.2006**
(21) Application number: 06000132.8
(22) Date of filing: 04.01.2006
(51) Int. Cl.: G01P 13/00

(54) **Road surface angle calculation apparatus and calculation method**

(30) Priority: 12.01.2005 JP 2005005243
(71) Applicant: MACNICA, INC., Yokohama-shi Kanagawa 222-8561 (JP)
(72) Inventor: Kakuda, Yasunobu, Yokohama-shi Kanagawa 222-8561 (JP); Hosaka, Jin, Yokohama-shi Kanagawa 222-8561 (JP)
(74) Representative: Möbus, Steffen

(57) **Abstract**

When calculating velocity from acceleration information obtained from an acceleration sensor that is installed in a vehicle, the road-surface angle is calculated instead of used the vehicle-velocity pulse to improve the accuracy of the velocity.

The invention comprises: an angle-calculation means 4 that calculates the road-surface angle α from the acceleration component Ax that is parallel to the road surface and the acceleration component Az that is perpendicular to the road surface that are obtained from an acceleration sensor 1 that is installed in the vehicle; a first calculation means 2 that calculates the value |Ax² + Az^{2 _} g²| from the aforementioned Ax and Az values and the acceleration due to gravity g; and a first comparison means 3 that determines whether or not the value |AX² + Az² - g²| is positive and is less than a specified value T1; and substitutes the road-surface angleα immediately after calculation for the old road-surface angle to update the angle when the result of the judgment by the first comparison means 3 is that the aforementioned values Ax and Az satisfy the condition 0 < |Ax² + Az² - g²| < T1.

## Description

### BACKGROUND OF THE INVENTION

### Field of the Invention:

This invention relates to a road-surface angle calculation apparatus and calculation method capable of accurately finding the road-surface angle for the purpose of improving the accuracy of the velocity value when calculating the velocity from the acceleration obtained from an acceleration sensor installed in a vehicle.

### Description of the Related Art:

In the case of calculating the velocity of a vehicle from the acceleration information of a 2-axis acceleration sensor located in the vehicle, for example, the velocity is obtained by integrating the acceleration over time, however, when there is a grade to the road surface, the effect of the angle of the vehicle appears in the velocity, so it is necessary to obtain information about the road-surface angle.

Normally, acceleration information that contains the acceleration due to gravity and that is obtained from the acceleration sensor is compared with the acceleration of the vehicle, which is the velocity of the vehicle obtained from the vehicle-velocity pulse differentiated with respect to time, and when the acceleration obtained from the acceleration sensor is greater than the acceleration obtained from the velocity, it is determined that there is an upward grade, and when the acceleration obtained from the acceleration sensor is less than the acceleration obtained from the velocity, it is determined that there is a downward grade.

There is also a method of subtracting the acceleration of the vehicle, which is obtained by differentiating twice the distance that the vehicle has moved that was obtained from the vehicle-velocity pulse, from the acceleration obtained from the acceleration sensor, and obtaining the road-surface angle from the acceleration found from the subtraction result, and from the acceleration due to gravity (refer to patent document 1).

### [Patent Document 1]

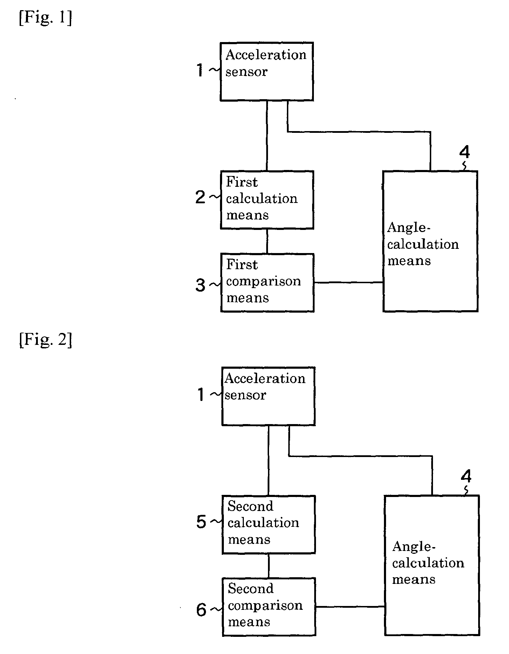

Japanese Patent PublicationNo. H10-253352 (paragraphs 0040 to 0048, and Fig. 1)

### [Problems to be Solved by the Invention]

In order to obtain angle information using the methods described above, both methods obtain a steady velocity and angle information from a relationship using the vehicle-velocity pulse, however, since the type of wiring and electrical pulse differs depending on the type of vehicle, there is a problem in that the wiring cannot be standardized.

### SUMMARY OF THE INVENTION

From the background described above, this invention was invented in order to solve the problem points with the methods using the vehicle-velocity pulse, and it proposes a road-surface-angle-calculation apparatus and calculation method that calculates the road-surface angle from acceleration information that is obtained from an acceleration sensor without using the vehicle-velocity pulse.

### [Means for Solving the Problems]

The invention according to claim 1 comprises as compositional elements: an angle-calculation means that calculates the road-surface angle from the acceleration component Ax that is parallel to the road surface and the acceleration component Az that is perpendicular to the road surface and that are obtained from an acceleration sensor that is installed in a vehicle; a first calculation means that calculates the value |Ax² + Az² - g²| from the aforementioned values Ax and Az and where g is the acceleration due to gravity; and a first comparison means that determines whether or not the value |Ax² + Az² - g²| is positive and is less than a certain set value. The acceleration sensor can be of any type such as an electrostatic capacitance type, apiezoelectric element type, or oscillation type, as long as it has a function for detecting the acceleration in the two directions Ax andAz, such as a two-axis acceleration sensor.

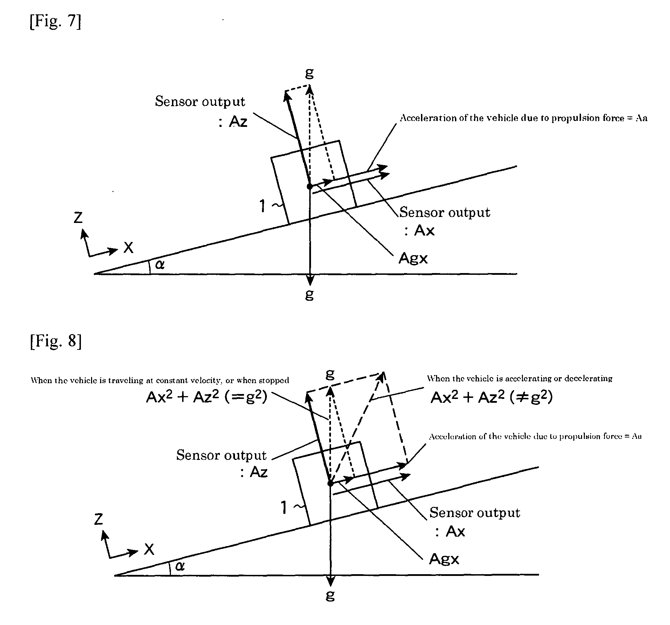

In Fig. 7, of the acceleration component Ax detected by the acceleration sensor 1, by taking the component of the acceleration due to gravity g that is parallel to the road surface to be Agx, and the vehicle acceleration that is parallel to the road surface to be Aa, Ax = Agx + Aa, so when Aa = 0, or in other words when the vehicle is stopped, or when the vehicle is traveling at a constant velocity, |Ax² + Az² - g²| = 0 is realized from Ax = Agx(g sinα), Az = g cosα. On the other hand, as shown in Fig. 8, when Aa ≠ 0, or in other words, when the vehicle is accelerating on an upward grade, or on a downward grade, Aa is added to Agx, so |Ax² + Az² - g²| > 0. Even when Aa ≠ 0 and the road-surface angle is large, Agx becomes large, so |Ax² + Az² - g²| > 0. Here, the road-surface angle α becomes g sinα and appears in Ax, and the vehicle acceleration Aa directly appears in Ax, and the effect of the vehicle acceleration Aa appears more remarkably in the value Ax² + Az² than the road-surface angle α.

Therefore, in a range where Ax² + Az² does not become much larger than g², or in other words, in a range where the value |Ax² + Az² - g²| is less than a certain set value T1, at the instant when changing from |Ax² + Az² - g²| = 0 to |Ax² + Az² - g²| > 0, or in other words, at the instant when the condition 0 < |Ax² + Az² - g²| < T1 is satisfied, by continuing to use the road-surface angle calculated by the angle-calculation means, it becomes possible to extract the acceleration component Ax that is obtained from the acceleration sensor as a value affected by the road-surface angleα without receiving the effect of the vehicle acceleration Aa. The certain set value T1 referred to in claim 1 is a value where the effect of the road-surface angle α appears in the value of Ax² + Az² in the range where the effect of the vehicle acceleration Aa does not appear, and it is set from various conditions such as the road-surface conditions, suspension, vehicle velocity, etc. The dimensions are (m/s²)².

The angle-calculation means calculates the road-surface angle α from the acceleration components Ax and Az that are obtained from the acceleration sensor. As shown in Fig. 7, in the range near where the road-surface angle α is 0° , for example, in the range 0° to 5° , tanα = Ax/Az, so the road-surface angle α (radians) is calculated from α = tan⁻¹ (Ax/Az). The road-surface angle α can be converted to degrees (°) as needed.
The first calculation means calculates the value |Ax² + Az² - g²| at each fixed time, and the first comparison means compares the calculated value |Ax² + Az² - g²| with a certain set value T1 for each time and determines whether or not Ax and Az that were used in the calculation of the road-surface angle α satisfy the condition 0 < |Ax² + Az² - g²| < T1. When the judgment result is that the condition 0 < |Ax² + Az² - g²| < T1 is satisfied, the road-surface angle α after update is substituted for the old road-surface angle α to update the angle. When the condition is not satisfied, the angle is not updated to road-surface angle α after update and the old road-surface angle before calculation continues to be used.

The invention according to claim 2 comprises as compositional elements: an angle-calculation means that calculates the road-surface angle from the acceleration component Ax that is parallel to the road surface and the acceleration component Az that is perpendicular to the road surface and that are obtained from an acceleration sensor that is installed in a vehicle; a second calculation means that calculates the square root of the difference of the sumof squares of the average value Axav of a plurality of acceleration components Axn that are parallel with the road surface and stored at each time, and the acceleration component Axn at each time and that are obtained from the acceleration sensor; and a second comparison means that determines whether or not the standard deviation of Ax obtained by the aforementioned second calculation means is less than a certain set value. The second calculation means calculates √Σ (Axn - Axav)², or in other words, the standard deviation of Ax. E means to calculate the total n from 1 to N number of time intervals that the road-surface angle is calculated.

The actual acceleration Aa of the vehicle is not directly related to the numerical value |Ax² + Az² - g²| that is used in order to calculate the road-surface angle α in claim 1, and the acceleration component Az that is perpendicular to the road surface is included, so there is a possibility that vibration of the engine or vehicle due to a rough road surface, or vibration of the suspension will be picked up and that the effects of the unsteadiness in the Z direction (changes in Az) will appear. For example, there is the possibility that the phenomenon will occur where even though Aa occurs and Ax becomes large, Az is small so Ax² + Az² does not become large, or where even though Aa is near 0 and Ax is small, Az is large so Ax² + Az² becomes large. Az becomes large when the vehicle receives a downward acceleration in the same direction as the acceleration due to gravity g, and becomes small when receiving an upward acceleration.

By taking the velocity at a certain time n-1 to be Vn-1, the velocity at the next time n to be Vn, the acceleration component that is parallel to the road surface and obtained from the acceleration sensor to be Ax and the inclination angle of the road surface (road-surface angle) to be α,Vn is found from Vn = Vn-1 + (Ax - g sinα) dt. Here, Ax becomes large when the vehicle acceleration Aa occurs, and even though Vn to be found should become large, when Az is taken to be small due to the vibration of the engine, tanα=Ax/Az becomes large, and since g sinα becomes large, the calculated value for Vn becomes less than the actual value.

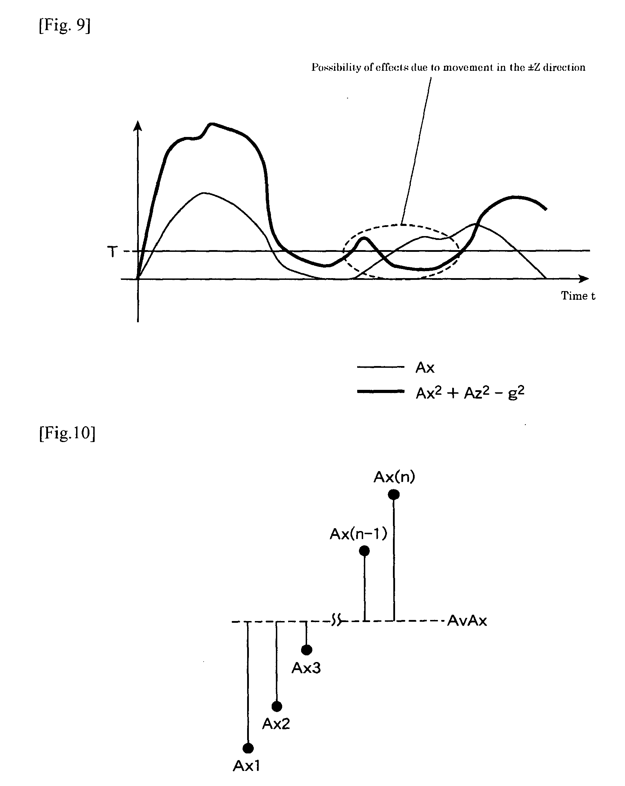

The effect of the vehicle accelerationAa remarkably appears in Ax, so as can be seen from the correspondence relationship on the same time line between Ax and |Ax² + Az² - g²| as shown in Fig. 9, when Ax increases sufficiently by the acceleration of the vehicle, the value of |Ax² + Az² - g²| should also increase. However, even though the Ax sufficiently increases due to the effect of movement in the Z direction, the value |Ax² + Az² - g²| may decrease (or not increase), and in this case, Vn will contain error.

On the other hand, when Ax is small, tanα itself is small, and near 0, so even though Ax² + Az² becomes large when Az is large, the error on the calculated road-surface angle α is small. From this, when Ax becomes large due to the occurrence of Aa, the effect of the error due to Az that is caused by vibration of the engine and the like can be said to appear easily in the road-surface angle α, so when calculating the road-surface angle α, by excluding the large range of Ax fluctuation, it is possible to reduce the error in the road-surface angle α.

The standard deviation of Ax indicates the level of fluctuation of Ax within a certain unit of time, so as shown in Fig. 10, when the fluctuation of Ax is large, or in other words, the larger the difference is between Ax and the average value Axav of a plurality of data, the standard deviation of Ax becomes large, so by using the standard deviation of Ax and excluding the large range of fluctuation of Ax, it is possible to reduce the effect of unsteadiness in Az.

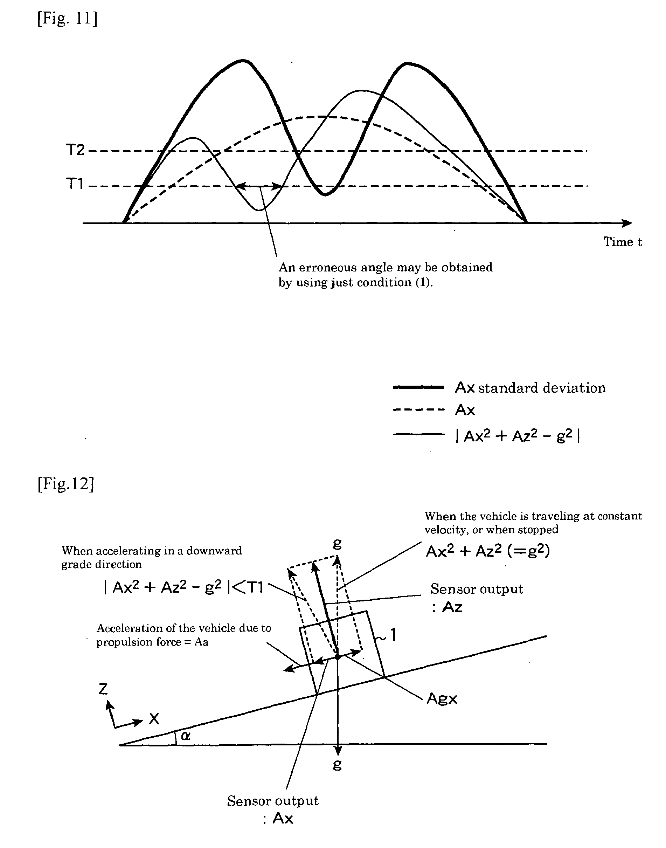

For example, in the process from the stopped state of the vehicle, through acceleration, deceleration and back to the stopped state, as shown by the dotted lines in Fig. 11, when time is taken to be along the horizontal axis, Ax plots a parabolic looking curve. As Ax decreases, |Ax² + Az² - g²| also originally plots a convex parabolic curve at the top, and then as shown by the solid line, during acceleration when the vehicle receives an upward acceleration as when the spring of the suspension changes from the compressed state to the elongated state, and as a result of Az becoming small, the curve may become convex on the bottom. Here, when determining the adequacy of the road-surface angle α from just the conditions of claim 1, while Az² is small, during acceleration of the vehicle, Ax² is large, and even though |Ax² + Az² - g²| > T1, it appears that |Ax² + Az² - g²| < T1, so when using Ax and Az an erroneous road-surface angle α is calculated.

On the other hand, as shown by the thick line in Fig. 11, during acceleration in the range where the change in velocity is large, the standard deviation of Ax has a difference with the average value Axav, so a convex curve is plotted on the top is plotted, and during operation at constant velocity in the range where the change in the velocity is small, the difference with the average value Axav is small, so a convex curve is plotted on the bottom, showing the remarkable difference with the average value Axav. Therefore, by adding to the conditions that the standard deviation of Ax be less than a certain set time T2 (standard deviation of Ax < T2), it becomes possible to pick up the value of Ax only immediately after acceleration when the change ΔAa in the vehicle acceleration Aa is small, or in other words, in the range where it is difficult for the effect of Az to appear, and immediately before stopping. In Fig. 11, Ax, |Ax² + Az² - g²| and the standard deviation of Ax, having different dimensions, are plotted together on the same timeline, however, this is just for convenience.

The standard deviation of Ax increases when the changeΔAa in the vehicle acceleration Aa is large, and decreases when it is small, however, since the condition, standard deviation of Ax < T2, can be used together with the condition, 0 < |Ax² + Az² - g²| < T1, it is not necessary to pick up the error that occurs from using just the condition |Ax² + Az² - g²| < T1, so T2, for example, is set in the range from when |Ax² + Az² - g²| = 0 until when |Ax² + Az² - g²| first reaches a peak. The dimensions are the same as Ax, m/s².

In claim 2, the angle-calculation means calculates the road-surface angle α from the acceleration components Ax and Az obtained from the acceleration sensor, the second calculation means calculates the standard deviation of Ax, and the second comparison means determines whether or not Ax and Az used in the calculation of the road-surface angle α satisfy the condition, standard deviation of Ax < T2. When the result of this judgment is that the condition, standard deviation of Ax < T2, is satisfied, then the road-surface angle α immediately after calculation is substituted for the old road-surface angle and the angle is updated. When the condition is not satisfied, the angle is not updated to the road-surface angle α immediately after the new calculation, and the old road-surface angle before the new calculation continues to be used.

The invention according to claim 3 comprises as compositional elements: an angle-calculation means that calculates the road-surface angle from the acceleration component Ax that is parallel to the road surface and the acceleration component Az that is perpendicular to the road surface and that are obtained from an acceleration sensor that is installed in a vehicle; a first calculation means that calculates the value |Ax² + Az² - g²| from the aforementioned values Ax and Az, where g is the acceleration due to gravity; a first comparison means that determines whether or not the value |Ax² + Az² - g²| is positive and is less than a certain set value; a second calculation means that calculates the square root of the difference of the sum of squares of the average value Axav of a plurality of acceleration components Axn that are parallel with the road surface and stored at each time, and the acceleration component Axn at each time and that are obtained from the acceleration sensor; a second comparison means that determines whether or not the standard deviation of Ax obtained by the aforementioned second calculation means is less than a certain set value; and a third comparison means that determines whether or not the time when the first comparison means determines that the aforementioned value |Ax² + Az² - g²| is positive and is less than a certain set value and the time when the second comparison means determines that the standard deviation of Ax is less than a certain set value is longer than a certain set amount of time.

As shown in Fig. 12, when the acceleration Aa acts on the vehicle in a negative X direction, the output Ax from the acceleration sensor becomes the sum of the component of the acceleration due to gravity g in the X direction Agx and the negative acceleration Aa (|Ax| = |Agx + Aa|), where Ax² + Az² has a tendency to become small. Therefore, for example, when the vehicle acceleration becomes Aa (̵ -2Agx and Ax (̵ -Agx, the value |Ax² + Az² - g²| )̵ 0, and even though the road-surface angle is positive, it may be recognized as being negative, and the condition |Ax² + Az² - g²| < T1 may be realized even by the vehicle acceleration in the negative X direction. This kind of state occurs by applying the break while the vehicle is traveling in the positive X direction, or when accelerating while the vehicle is traveling in the negative X direction.

However, since it can be considered to be rare for this kind of irregular situation to continue for a long period of time, Ax of the vehicle in this kind of situation is not picked up, so by substituting the road-surface angle α immediately after calculation for the old road-surface angle and updating the angle only when the condition, 0 < |Ax² + Az² - g²| < T1, of claim 1, and the condition, standard deviation of Ax < T2, of claim 2 continue for a fixed time T3, it is possible to calculate the angle with high accuracy. When the conditions do not continue for the fixed time T3, the angle is not updated with the road-surface angle α immediately after new calculation, and the old road-surface angle before the new calculation continues to be used.
When dividing the amount of time by the time units when the first calculation means calculates the value |Ax² + Az² - g²|, the amount of time of the irregular situation described above is considered not to continue over a plurality of time units, so the time T3 is set as the amount of time of this plurality of time units. The dimensions are seconds.

The invention according to claim 4 comprises as a compositional element: a fourth comparisonmeans that determines whether or not the previously calculated value of the road-surface angle calculated by the angle-calculation means of the invention according to any one of the claims 1 to 3 is greater than a certain set value, and whether or not the new calculated value is greater than the previously calculated value; and where of the aforementioned first to third comparison means, at least one of the comparison means performs judgment according to the judgment results of this fourth comparison means. When determining whether or not the previously calculated road-surface angle αold is greater than a certain set value N° , the dimensions of either α (radians) or N (degrees) is converted to the dimensions of the other.

When the fourth comparison means determines that the previously calculated value of the road-surface angle (old road-surface angle) that was calculated by the angle-calculation means is a certain set value or greater, and that the new calculated value (road-surface angle immediately after the new calculation) is greater than the previously calculated value, as will be explained later, there is a possibility that the new calculated value αnew contains error. In order that this kind of error is not maintained, after going through the judgment by the fourth comparison means of claim 4, the first comparison means of claim 1 compares the value |Ax² + Az² - g²| with T1, the second comparison means of claim 2 compares the standard deviation of Ax with T2, and the third comparison means of claim 3 determines whether or not the condition, 0 < |Ax² + Az² - g²| < T1, and the condition, standard deviation of Ax < T2, continues for a fixed time T3. Above, when referring to at least any one of the first to third comparison means performing a judgment, includes the case when, of the first to third comparison means, one of the comparison means makes a judgment, and the case when, of the first to third comparison means, all of the comparison means make a judgment.

In claim 4, the first comparison means compares the value |Ax² + Az² - g2| with T1, the second comparison means compares the value of the standard deviation of Ax with T2, the third comparison means determines whether or not the condition, 0 < |Ax² + Az² - g²| < T1, and the condition, standard deviation of Ax < T2, continues for a fixed time T3, and based on the judgment results by the first to third comparison means, determines whether or not to substitute the road-surface angle α immediately after calculation for the old road-surface angle and update the angle, so according to the judgment result by the fourth comparison means, the accuracy of the road-surface angle calculated by the angle-calculation means is improved. As will be described later, different values are used for T1, T2 and T3, which are the objects of comparison by the first to third comparison means, according to the size of the previously calculated value αold and the increasing or decreasing tendency of the new calculated value αnew.

Even when further restricting the conditions of claim 1 as in claim 2 or claim 3, it cannot be said that there is no possibility of calculating an erroneous angle due to road-surface conditions, engine vibration, difference between the spring constants of the front and rear suspension. For example, when a change ΔAa in the acceleration Aa of the vehicle is caused by the change in accelerationAx, Az obtained by the acceleration sensor, that change often depends on the engine vibration during acceleration or deceleration, and the spring characteristics of the suspension.

Also, as long as there are no special road conditions, once the maximum estimated value, for example an angle of ±5° to 7° or greater, is calculated as the actual road-surface angle, it is difficult to think that the next calculated value will have a further increasing tendency, so once an angle that is estimated to be the maximum value has been calculated, if the angle calculated next has an increasing tendency, there is a high possibility that that calculated value contains error. On the other hand, even though the previously calculated value αold is ±5° to 7°or greater, if the next new calculated value αnew has a decreasing tendency, it can be said that there is a low possibility that the new calculated value αnew contains error.

Therefore, after gaining an understanding of the current road-surface conditions (angle) from the size of the previously calculated valueαold, the judgment, based on the comparison of the previously calculated value αold and the new calculated value αnew, of whether or not the road-surface angle has an increasing tendency or a decreasing tendency is added, for example, when the fourth comparison means determines that the absolute value of the previously calculated value αold is a certain set value N° or greater, and that the absolute value of the new calculated value αnew is greater than the absolute value of the previously calculated value αold, or in other words, when the previously calculated value αold is ±5° to 7° or greater, and the absolute value of the new calculated valueanew has an increasing tendency, by having at least one of the comparison means from among the first to the third comparison means perform comparison using T1, T2 and T3 that are set to a strict value such that error is not contained in the new calculated value αnew, it becomes possible to reduce the effect of the engine vibration and suspension and to calculate a more accurate angle.

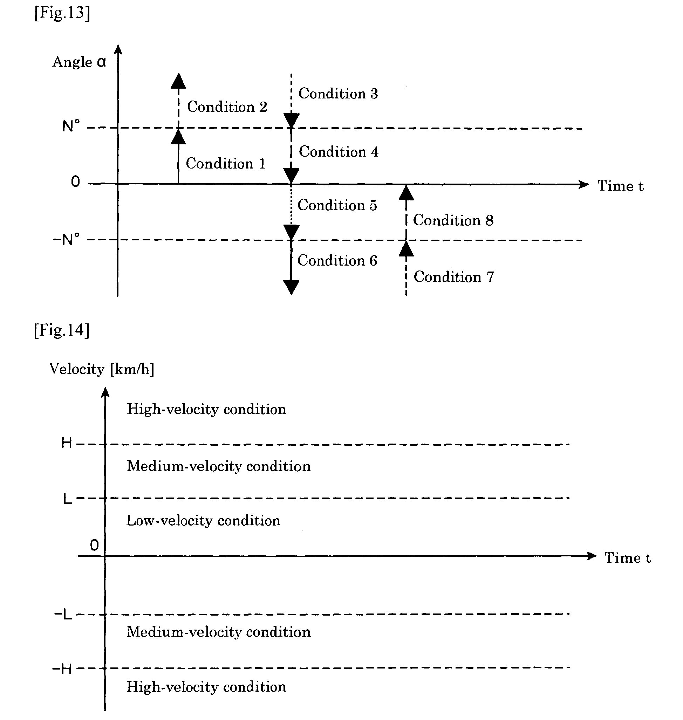

More specifically, as shown in Fig. 13, when the absolute value N°of the actually estimated maximum road-surface angle is set (for example, ±5° to 7°, changes according to the situation), when the absolute value of the previously calculated value αold is N°or greater, and when the absolute value of the new calculated value αnew is greater than the absolute value of the previously calculated value αold (conditions 2 and 6), the new calculated value αnew is greater than the estimated maximum road-surface angle ±N° and has an increasing tendency, so it is thought that there is a high possibility that the new calculated value αnew contains error. In these cases, strict values are given to T1, T2 and T3 that are used for comparison by the first to third comparison means, so it is difficult to update the previously calculated value αold to the new calculated value αnew.

In the case when the absolute value of the previously calculated valueαold is less than N°, even though the absolute value of the new calculated value αnew has an increasing tendency (conditions 1, 5), it can be thought that there is a low possibility that the new calculated value αnew contains error. Also, even when the absolute value of the previously calculated value αold is N°or greater, in the case where the absolute value of the new calculated value αnew has a decreasing tendency (conditions 3, 7), it is can be thought that there is a low possibility that the new calculated value αnew contains error. Also, in the case where the absolute value of the previously calculated αold is less than N°, and when the absolute value of the new calculated value αnew has a decreasing tendency (conditions 4, 8), it canbe thought that there is a lowpossibility that error is contained. In these cases, relaxed values are given to T1, T2 and T3 that are used for comparison by the first to third comparison means, so it is easy to update the previously calculated value αold to the new calculated value αnew.

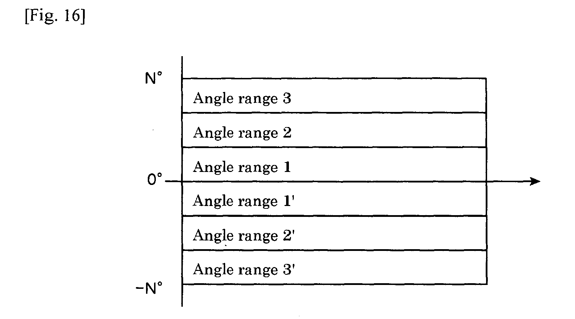

More specifically, as shown in Fig. 16, when the aforementioned certain set value N° is divided into a plurality of angle ranges to which the previously calculated value αold belongs and divided for each angle range according to whether the new calculated value αnew has a tendency to increase or decrease more or less than the previously calculated value αold, the values T1, T2 and T3 that are compared by the first to third comparison means for each case are set in advance, and the first to third comparison means perform comparison with the values T1, T2 and T3 for each of the divided conditions. The values for T1, T2 and T3 are different for each case.

For example, when the previously calculated value αold belongs to angle range 1 shown in Fig. 16, and the new calculated value αnew has a tendency to increase more than the previously calculated value αold, the values T11, T21 and T2, which are set as T1, T2 and T3 are used; and when the previously calculated value αold belongs to angle range 1 and the new calculated value αnew has a tendency to decrease less than the previously calculated value αold, different values T12, T22 and T32 are used. In this way, the cases are divided into two values for each angle range according whether the new calculated value αnew has a tendency to increase or decrease more or less than the previously calculated value αold, so as shown in Fig. 16, when the angle ranges are divided into six divisions for negative and positive, T1, T2 and T3 are preset to 6 x 2 = 12 values.

When the previously calculated value αold is 6° and the new calculated value is 7 °, and when 6 ° has already been calculated as near the maximum value estimated as the actual road-surface angle and further has an increasing tendency, there is a possibility that the new calculated value αnew contains error, so T11, T21 and T31 are set to values such that it is difficult to update the previously calculated value αold to the new calculated value αnew. On the other hand, when the previously value αold is 6° and the new calculated value is 5°, and there is a decreasing tendency, it is considered that there is low possibility that the new calculated value αnew contains error, so the T12, T22 and T32 are set to values such that it is easy to update the previously calculated value αold to the new calculated value αnew. Here, the values T12, T22 and T32 are set for relaxed conditions, whereas the values T11, 21 and T31 are set for strict conditions, so T11, 21 and T31 are set so that they are 90% of T12, T22 and T32, for example.

In this way, by dividing the values into two values according to whether the new calculated value αnew has an increasing or decreasing tendency for each angle range that the previously calculated value αold belongs, comparison is performed by the first to third comparison means using T1, T2 and T3 to which values are assigned such that it is difficult to update the previously calculated value αold to the new calculated value αnew when there is a possibility that the new calculated value αnew contains error, and values are assigned such that it is easy to update the previously calculated value αold to the new calculated value αnew when there is a low possibility that the new calculated value αnew contains error, so even when the previously calculated value αold contains error, it becomes possible to correct the error when calculating the new calculated value αnew, and restore the value to an accurate value.

The invention according to claim 5 comprises as compositional elements: an angle-comparison means that determines whether or not the difference between the new calculated value and the previously calculated value that are calculated by the angle-calculation means of the invention in any one of the claims 1 to 4 is greater than a certain set value; and an angle-update means that calculates a value obtained by adding a value, which is sufficiently less than the difference between the new calculatedvalue and previously calculated value, to the previously calculated value as the new calculated value immediately after update when the angle-comparison means determines that the difference is greater than a certain set value.

Since it is not likely that the road-surface angle α of an actual road will change suddenly, then in the case were the difference αdif (°) between the angle of the previously calculated value αold (°) and the angle of the new calculated value αnew (°) is greater than a certain set value M°, for example 4° to 5°, it is likely that the new calculated valueαnew contains error. Therefore, when the angle difference αdif is greater than M° (for example 5°), by using a value obtained by adding a value that is sufficiently less than the maximum estimated value of the angle difference, for example Δα (1° to 2°) to the previous angle αold as the new angle αnew (αnew = αold +Δα), it is possible to reduce the error in the new calculated value. When the angle difference αdif is 5° or less, it is possible to use a value obtain by adding that angle difference αdif to the previous angle αold (αnew = αold + αdif), or in other words, it is possible to use the new calculated value as is as the new angle αnew.

The invention according to claim 6 comprises as compositional elements: a velocity-calculation means that calculates the vehicle velocity using the road-surface angle that was calculated by the angle update means of the invention in claim 5 and the acceleration component Ax that was obtained from the acceleration sensor; and a fifth comparison means that determines which velocity range the vehicle velocity calculated by the velocity-calculation means belongs to when the vehicle velocity is divided into at least the two velocity ranges, low velocity and high velocity; and where at least any one of the first to third comparison means performs judgment according to the judgment results of this fifth comparison means. From the aspect of judgment accuracy of the fifth comparison means, dividing the vehicle velocity into three or more velocity ranges that includes medium velocity is appropriate.

As described above, the velocity-calculation means finds the new velocity Vn from the previously calculated velocity Vn-1, acceleration component Ax that is parallel to the road surface and obtained from the acceleration sensor, and the previously calculated road-surface angle α as Vn = Vn-1 + (Ax - g sinα) dt.

For example, it is more difficult for the vehicle angle to change when traveling at a fixed high velocity when compared to when the vehicle is traveling at low velocity for fixed amount of time or more, such as during a traffic jam, when it become easy for the vehicle angle to change due to the effect of the suspension caused by repeated alternating acceleration and deceleration, so differences occur in accuracy of the angle calculated by the angle-calculation means due to the differences in preconditions of whether traveling at low velocity or high velocity.

Therefore, as shown in Fig. 14, by diving the vehicle velocity into at least two of the velocity ranges low velocity, medium velocity and high velocity, and having the first comparison means of claim 1 compare the value |Ax² + Az² - g²| with T1, having the second comparison means of claim 2 compare the standard deviation of Ax with T2, and having the third comparison means of claim 3 determine whether or not the condition, 0 < |Ax² + Az² - g²| < T1, and the condition, standard deviation of Ax < T2, continue for fixed time T3, the velocity range is reflected on the comparison by each comparison means, so it is possible to decrease the error caused by the size of the velocity. Above, when referring to at least anyone of the first to third comparison means performing a judgment, includes the case when, of the first to second comparison means, one of the comparison means makes a judgment, and the case when, of the first to third comparison means, all of the comparison means make a judgment.

For example, when continuously traveling at low velocity, it becomes easy for the vehicle angle to change due to repeated acceleration and deceleration, and even when the first comparison means of claim 1 determines that 0 < |Ax² + Az² - g²| < T1, since it is easy for that effect to appear in the information Ax and Az from the acceleration sensor, the reliability of the road-surface angle α with that judgment as a condition is questionable.

In this case, by using T1, T2 and T3 that are prepared for each velocity range as in claim 4 and having the first comparison means compare the value |Ax² + Az² - g²| with T1, having the second comparison means compare the standard deviation of Ax with T2, and having the third comparison means determine whether or not the condition, 0 < |Ax² + Az² - g²| < T1, and the condition, standard deviation of Ax < T2, continue for fixed time T3, whether or not to substitute the road-surface angle α immediately after calculation for the old road-surface angle and updating the angle according to the respective judgment results by the first to third comparison means is determined, so the accuracy of the road-surface angle calculated by the angle-update means improves.

Similar to the values for T1, T2 and T3 in claim 4, in claim 6, for example, when the current velocity belongs to the low-velocity velocity range shown in Fig. 14, values T11, T21 and T31 that are set respectively as T1, T2 and T3 are used, and separate values T12, T22 and T32 are used when the current velocity belongs to the high-velocity velocity range. The velocity is divided into velocity ranges in this way, and, as shown in Fig. 14, when dividing the velocity into positive and negative for a total of 6 velocity ranges, 6 values for T1, T2 and T3 are prepared in advance.

The invention according to claim 7 corresponds to the invention of claim 1 and comprises as compositional elements: a calculation process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a first calculation means calculates the value |Ax² + Az² - g²| from the aforementioned values Ax and Az and where g is the acceleration due to gravity; and a process in which a first comparisonmeans determines whether or not the value |Ax² + Az² - g²| is positive and is less than a certain set value.

The invention according to claim 8 corresponds to the invention of claim 2 and comprises as compositional elements: a process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a second calculationmeans calculates the square root of the difference of the sum of squares of the average value Axav of a plurality of acceleration components Axn that are parallel with the road surface and stored at each time, and the acceleration component Axn at each time and that are obtained from the acceleration sensor; and a process in which a second comparison means determines whether or not thes tandard deviation of Ax obtained by the aforementioned second calculation means is less than a certain set value.

The invention according to claim 9 corresponds to the invention of claim 3 and comprises as compositional elements: a process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a first calculation means calculates the value |Ax² + Az² - g²| from the aforementioned values Ax and Az, where g is the acceleration due to gravity; a process in which a first comparison means determines whether or not the value |Ax² + Az² - g²| is positive and is less than a certain set value; a process in which a second calculation means calculates the square root of the difference of the sum of squares of the average value Axav of a plurality of acceleration components Axn that are parallel with the road surface and stored at each time, and the acceleration component Axn at each time and that are obtained from the acceleration sensor; a process in which a second comparisonmeans determines whether or not the standard deviation of Ax obtained by the aforementioned second calculation means is less than a certain set value; and a process in which a third comparison means determines whether or not the time when the first comparison means determines that the aforementioned value |Ax² + Az² - g²| is positive and is less than a certain set value and the time when the second comparison means determines that the standard deviation of Ax is less than a certain set value is longer than a certain set amount of time.

The invention according to claim 10 corresponds to the invention of claim 4 and comprises as a compositional element: a process in which a fourth comparison means determines whether or not a previously calculated value of the road-surface angle calculated by the angle-calculation means of the invention according to any one of the claims 7 to 9 is greater than a certain set value, and whether or not the new calculated value is greater than the previously calculated value; and where at least any one of the aforementioned first to third comparison means performs judgment according to the judgment results of this fourth comparison means.

The invention according to claim 11 corresponds to the invention of claim 5 and comprises as compositional elements: a process in which an angle-comparison means determines whether or not the difference between the new calculated value and the previously calculated value that are calculated by the angle-calculation means of the invention in any one of the claims 7 to 10 is greater than a certain set value; and a process in which an angle-update means calculates a value obtained by adding a value, which is sufficiently less than the difference between the new calculated value and previously calculated value, to the previously calculated value as the new calculated value immediately after update when the angle-comparison means determines that the difference is greater than a certain set value.

The invention according to claim 12 corresponds to the invention of claim 6 comprises as compositional elements: a process in which a velocity-calculation means calculates the vehicle velocity using the road-surface angle that was calculated by the angle update means of the invention in claim 11 and the acceleration component Ax that was obtained from the acceleration sensor; andaprocess in which a fifth comparisonmeans determines which velocity range the vehicle velocity calculated by the velocity-calculation means belongs to when the vehicle velocity is divided into at least the two velocity ranges, low velocity and high velocity; and where at least any one of the first to third comparison means performs judgment according to the judgment results of this fifth comparison means.

### [Effect of the Invention]

As described above, in this invention the road-surface angle is calculated from acceleration information obtained from an acceleration sensor instead of using the vehicle-velocitypulse, so it is possible to eliminate the problem of wiring when using the vehicle-velocity pulse.
BRIEF DESCRIPTION OF THE DRAWINGS
Fig. 1 is a block diagram of a road-surface-angle-calculation apparatus comprising a first calculation means, a first comparison means and an angle-calculation means.
Fig. 2 is a block diagram of a road-surface-angle-calculation apparatus comprising a second calculation means, a second comparison means and an angle-calculation means.
Fig. 3 is a block diagram of a road-surface-angle-calculation apparatus comprising a third comparison means.
Fig. 4 is a block diagram of a road-surface-angle-calculation apparatus comprising a fourth comparison means.
Fig. 5 is a block diagram of a road-surface-angle-calculation apparatus comprising an angle comparison means.
Fig. 6 is a block diagram of a road-surface-angle-calculation apparatus comprising a velocity calculation means and fifth comparison means.
Fig. 7 is a schematic diagram showing the acceleration component that is detected by the acceleration sensor mounted in a vehicle on an inclined road surface.
Fig. 8 is a schematic diagram showing the acceleration component that is detected by the acceleration sensor when the vehicle accelerates.
Fig. 9 is a graph showing the state when comparing the acceleration component Ax that is parallel with the road surface and |Ax² + Az² - g²| on the same time axis.
Fig. 10 is a graph showing the relationship between the acceleration component Axn that is parallel with the road surface at each time, and the average value Axav of a plurality of Axn.
Fig. 11 is a graph showing the state when comparing Ax, the standard deviation value of Ax and |Ax² + Az² - g²| on the same time axis.
Fig. 12 is a schematic diagram showing the acceleration component that is detected by the acceleration sensor when the vehicle accelerates in a downward grade direction.
Fig. 13 is a graph showing an example of dividing up judgment among a first to third comparison means for each direction change in road-surface angle with respect to the absolute value N° of the road-surface angle in a realistically estimated range.
Fig. 14 is a graph showing an example of dividing up velocity ranges when dividing up judgment among a first to third comparison means for each velocity range.
Fig. 15 is a flowchart showing an example of the operation steps of the road-surface-angle-calculation apparatus shown in Fig. 6.
Fig. 16 is an explanatory diagram in the case of classifying the angles belonging to the previous calculation values αold for comparison by the fourth comparisonmeans into 6 angle ranges.

### DESCRIPTION OF THE PREFERRED EMBODIMENTS

The preferred embodiments of the invention will be explained using the drawings.

Fig. 1 is a block diagram of the road-surface-angle-calculation apparatus of claim 1 comprising: an angle-calculation means 4 such as a CPU or MPU that calculates the road-surface angle α from acceleration component Ax that is parallel to the road surface and the acceleration component Az that is perpendicular to the road surface that are obtained from an acceleration sensor 1 that is installed in the vehicle; a first calculation means 2 such as a CPU or MPU that calculates the value |Ax² + Az² - g²| from the aforementioned Ax and Az values and the acceleration due to gravity g; and a first comparison means 3 such as a CPU or MPU that determines whether or not the aforementioned value |Ax² + Az² - g²| is positive and less than a specified value T1. A 2-axis acceleration sensor or 3-axis acceleration sensor having a function for detecting the acceleration in at least the two dimensions Ax and Az is used as the acceleration sensor.

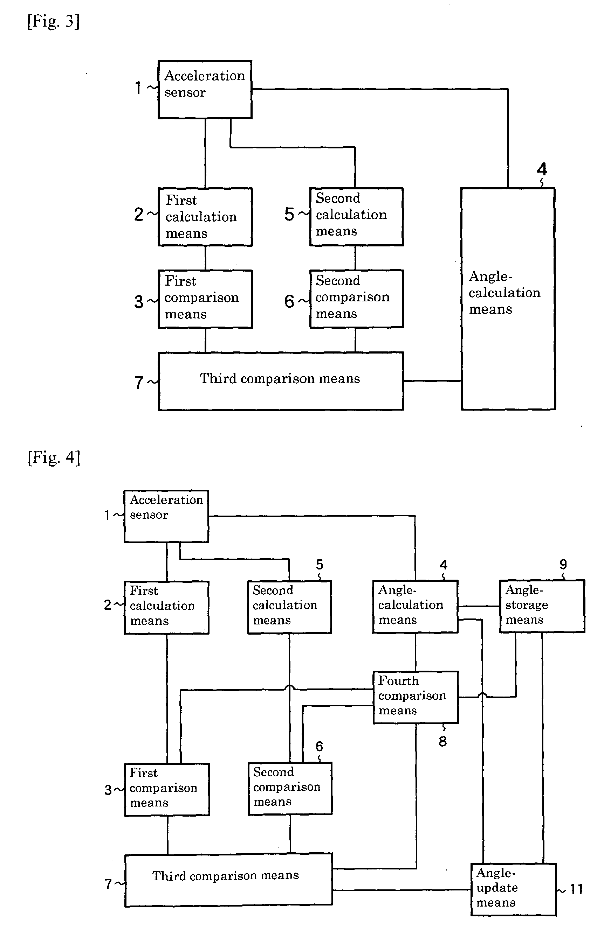

The data for Ax and Az that the acceleration sensor 1 detects at certain time intervals is sent to the angle-calculation means 4, and the angle-calculation means 4 calculates the road-surface angle α from the data Ax and Az asα = tan⁻¹(Ax/Az). The road-surface angle α that is calculated by the angle-calculation means 4 is stored by the angle-storage means 9 shown in Fig. 4. The data for Ax and Az is also sent to the first calculation means 2, and the first-calculation means 2 calculates the value |Ax² + Az² - g²| at each fixed time and sends that result to the first comparison means 3.

In the first comparison means 3, the effect of the vehicle acceleration Aa does not appear in the value Ax² + Az², and a certain fixed value T1 ((m/s²)²) is stored in advance as a value in which the effect of the road-surface angle α appears, and after each fixed interval of time, the first comparison means 3 determines whether or not |Ax² + Az² - g²| is within the range 0 < |Ax² + Az² - g²| < T1, and when the first comparison means 3 determines that the values Ax and Az satisfy the condition 0 < |Ax² + Az² - g²| < T1 when the angle-calculation means 4 newly calculates the road-surface angle α from the values Ax and Az, the angle-update means 11 (described later) substitutes the new road-surface angle α calculated by the angle-calculation means 4 for the old road-surface angle that was calculated the previous time, to update the angle. When the first comparison means 3 determines that |Ax² + Az² - g²| is not within the range 0 < |Ax² + Az² - g²| < T1, the angle is not updated with a new road-surface angle α, and the old road-surface angle calculated the previous time continues to be used.

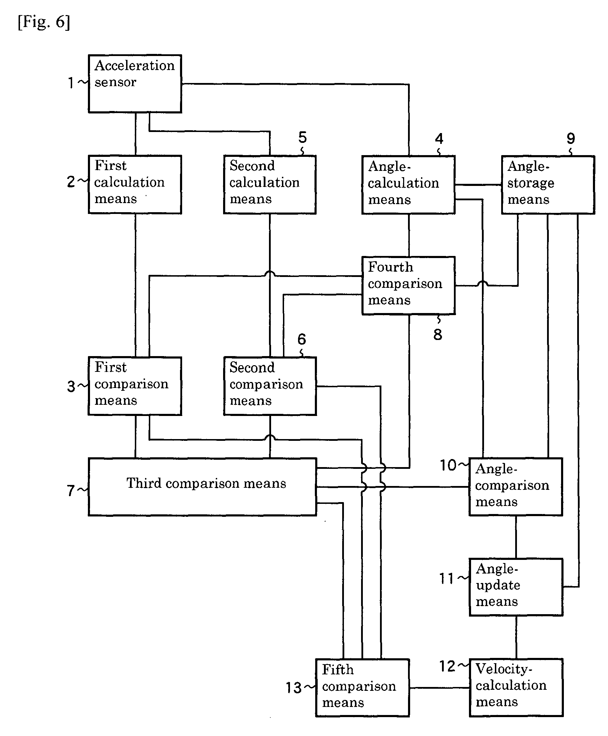

The updated new road-surface angle α is finally sent from the angle-calculation means 4 together with the value Ax from the acceleration sensor 1 to the velocity-calculation means 12 shown in Fig. 6, and the velocity-calculation means 12 uses the velocity Vn-1 at the previous time n-1 calculated after each fixed interval, Ax and α to calculate the velocity Vn at the current time n as Vn-1 + (Ax - g sinα)dt.

Fig. 2 is a block diagram of the road-surface-angle-calculation apparatus of claim 2 comprising: an angle-calculation means 4 such as a CPU or MPU that calculates the road-surface angle α from acceleration component Ax that is parallel to the road surface and the acceleration component Az that is perpendicular to the road surface that are obtained from an acceleration sensor 1 that is installed in the vehicle; a second calculation means 5 such as a CPU or MPU that calculates the square root of the sum of the differences of the average value Axav of the acceleration component Axn that is parallel with the road surface and obtained from the aforementioned acceleration sensor 1 and the acceleration component Axn for each of a plurality of stored times; and a second comparison means 6 such as a CPU or MPU that determines whether or not the standard deviation of Ax obtained by the second calculation means 5 is less than a certain set value T2.

In this case as well, the data for Ax andAz, which is detected after each fixed amount of time by the acceleration sensor 1, is sent to the angle-calculation means 4, and the angle-calculation means 4 calculates the road-surface angle α from the data Ax and Az asα = tan⁻¹ (Ax/Az) . The road-surface angle α that is calculated by the angle-calculation means 4 is stored by the angle-storage means 9 shown in Fig. 4.

The data for Axn that is detected by the acceleration sensor 1 after each fixed amount of time is sent to the second calculation means 5, and the second calculation means 5 calculates the average value Axav of a plurality of Axn after each fixed time, and furthermore, uses data for the plurality of Axn and the value Axav to calculate √Σ (Axn-Axav)², which is the standard deviation of Ax. The standard deviation of Ax that was obtained by the second-calculationmeans 5 is sent to the second-comparisonmeans 6.

As shown in Fig. 11, in the second comparison means 6, a certain value T2 (m/s2), which is set for the range from when |Ax² + Az² - g²| = 0 until when |Ax² + Az² - g²| first reaches a peak, is stored, and the second comparison means 6 determines whether or not the standard deviation of Ax is less than this value T2; and when the second comparison means 6 determines that the Ax at the time when the road-surface angle αis newly calculated by the angle-calculation means 4 from Ax and Az satisfies the condition of the standard deviation of Ax < T2, the angle-update means 11 (described later) substitutes road-surface angle α that is newly calculated by the angle-calculation means 4 for the old road-surface angle that was calculated previously, and updates the angle. When the second comparison means 6 determines that Ax is not within the range such that the standard deviation of Ax < T2, the new road-surface angle α is not updated, and the old road-surface angle that was calculated previously continues to be used. The updated new road-surface angle α is stored by the angle-storage means 9.

Fig. 3 is a block diagram of the road-surface-angle-calculation apparatus of claim 3 comprising: an angle-calculation means 4 such as a CPU or MPU that calculates the road-surface angle α from acceleration component Ax that is parallel to the road surface and the acceleration component Az that is perpendicular to the road surface that are obtained from an acceleration sensor 1 that is installed in the vehicle; a first calculation means 2 such as a CPU or MPU that calculates the value |Ax² + Az² - g²| from the aforementioned Ax and Az values and the acceleration due to gravity g; a first comparison means 3 such as a CPU or MPU that determines whether or not aforementioned value |Ax² + Az² - g²| is positive and less than a specified value T1, a second calculation means 5 such as a CPU or MPU that calculates the square root of the sum of the differences of the squares of the average value Axav of the acceleration component Axn, which is parallel with the road surface and obtained from the acceleration sensor at each of a plurality of stored times, and the acceleration component Axn at each of the aforementioned times; a second comparison means 6 such as a CPU or MPU that determines whether or not the standard deviation of Ax obtained by the second calculation means 5 is less than a certain set value T2, and third comparison means 7 such as a CPU or MPU that determines whether or not the time duration when the first comparison means 3 determines that the value |Ax² + Az² - g²| is positive and less than a specified value T3, and when the second comparison means 6 determines that the standard deviation of Ax is less than a set value is longer than a certain set amount of time.

The judgment results by the first comparison means 3 and the second comparison means 6 at each time are sent to the third comparison means 7. Taking into consideration irregular conditions that do not normally occur continuously such as braking when the vehicle is traveling in the positive X direction, or accelerating when the vehicle is traveling in the negative direction, a certain length of time T3 is stored in the third comparison means 7, and when the third comparison means 7 determines that the judgment time by the first comparison means 3 and second comparison means 6 exceeds T3, the angle-update means 11 (describedlater) substitutesthenewroad-surfaceangle α calculated by the angle-calculation means 4 for the old road-surface angle calculated previously and updates the angle. When the third comparison means 7 determines that the judgment time by the first comparison means 3 and second comparison means 6 is less than T3, the new road-surface angle α is not updated and the old road-surface angle calculated previously continues to be used. The updated new road-surface angle α is stored by the angle-storage means 9.

Fig. 4 is a block diagram of the road-surface-angle-calculation apparatus of claim 4 comprising a fourth comparison means 8 such as a CPU or MPU that determines whether or not the previously calculated value of the road-surface angle (old road-surface angle) αold calculated by the aforementioned angle-calculation means 4 is a certain set value N° or greater, and determines whether or not the new calculated value (new road-surface angle) αnew is greater than the previously calculated value αold, and where of the first to third comparison means, at least one performs judgment according to the judgment results of this fourth comparisonmeans 8.

The angle-calculation means 4 calculates the road-surface angle α at each time using the data for Ax and Az from the acceleration sensor 1 according to α = tan⁻¹ (Ax/Az), and this road-surface angle α is stored temporarily as the previously calculated value by the angle-storage means 9. The fourth comparison means 8 compares the previously calculated value αold with the value N° that is set as the realistically estimated maximumroad-surface angle, and compares the new calculated value αnew with the previously calculated value αold. Here, the previously calculated value αold (radian) and set value N° are compared using the same dimension.

The value N° that is used here is classified into a plurality of angle ranges as shown in Fig. 16 according to the size of the previously calculated value αold, and two different values x the number of angle ranges (T11/T21/T31 to T1n/T2n/T3n) are prepared as the set values T1, T2 and T3, which are the object of the comparison by the first thru the third comparison means 3, 6, 7 according as described above for each angle range whether the new calculated valueαnew has a tendency to become increasingly greater or less than the previously calculated value αold. The fourth comparison means 8 described above compares the previously calculated value αold with the value N°, and more specifically it means that it determines whether or not the previously calculated value αold is equal to the value N° or greater, and when it is less, determines which angle range it belongs to.

The first comparison means 3 compares the value |Ax² + Az² - g²| with T1, and when it determines that 0 < |Ax² + Az² - g²| < T1, the angle-update means 11 substitutes the new calculated value αnew for the previously calculated value αold and updates the angle, otherwise the new calculated value αnew is not updated and the previously calculated value αold continues to be used. Similarly, the second comparison means 6 compares the standard deviation of Ax with T2, and when the second comparison means 6 determines that the standard deviation of Ax is less than T2, the new calculated angleαnew is substituted for the previously calculated value αold and the angle is updated, otherwise, the new calculated value αnew is not updated and the previously calculated value αold continues to be used.

The third comparison means 7 performs a comparison to determine whether or not the condition of 0 < |Ax² + Az² - g²| < T1, and the condition of the standard deviation of AX < T2 continues for a fixed amount of time T3, and when the judgment time by the first comparison means 3 and the second comparison means 6 exceeds T3, then the new calculated value αnew is substituted for the previously calculated value αold and the angle is updated, otherwise, the new calculated value αnew is not updated and the previously calculated value αold continues to be used. In any case, the updated road-surface angle α is stored by the angle-storage means 9.

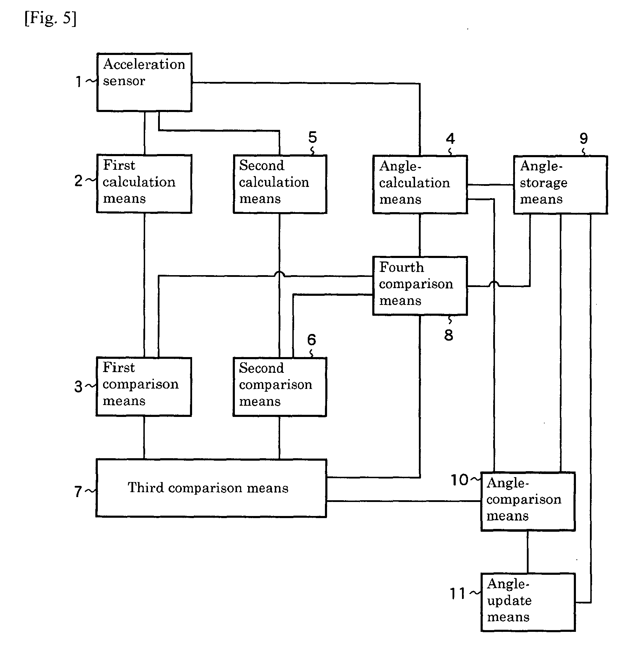

Fig. 5 is a block diagram of the road-surface-angle-calculation apparatus of claim 5 comprising: an angle-comparison means 10 such as a CPU or MPU that determines whether or not the difference αdif (°) between the new calculated value αnew that is calculated at each time by the angle-calculation means 4 and the previously calculated value αold is greater than a certain set value M° ((̵N°) (αdif >M°), and an angle-update means 11 such as a CPU or MPU that, when the angle-comparison means 10 determines that αdif is greater than the set value M° , calculates the value to which a value Δα that is sufficiently less than the difference αdif between the new calculated value αnew and the previously calculated value αold has been added to the previously calculated value αold as the new calculated value after update. The new calculated value αnew after update is stored by the angle-storage means 9.

Fig. 6 is a block diagram of the road-surface-angle-calculation apparatus of claim 6 comprising: a velocity-calculation means 12 such as a CPU or MPU that calculates the vehicle velocity using the road-surface angle α calculated by the angle-update means 11 shown in Fig. 4 and Fig. 5 and the acceleration component Ax obtained from the acceleration sensor 1, and a fifth comparison means 13 such as a CPU or MPU that, when the vehicle velocity is divided into at least the two velocity ranges low velocity and high velocity, determines which velocity range the vehicle velocity calculated by the velocity-calculation means 12 belongs to, and where at least either the first, second or third comparison means 3, 6, 7 performs judgment according to the judgment result of this fifth comparison means 13. As shown in Fig. 14, in order to improve the precision of the judgment by the fifth comparison means 13, dividing the vehicle velocity into three or more velocityranges, lowvelocity, mediumvelocityandhighvelocity, is suitable.

The judgment result from the fifth comparison means 13 is sent to the first comparison means 3, second comparison means 6 and third comparison means 7, and the first thru the third comparison means 3, 6, 7 perform comparison with the respective set values based on the judgment result of the fifth comparison means 13, or in other words, based on which velocity range, low velocity, medium velocity or high velocity, the vehicle velocity belongs to. The first comparison means 3 compares the value |Ax² + Az² - g²| with T1 for each velocity range, and when the first comparison means 3 determines that 0 < |Ax² + Az² - g²| < T1, the angle-update means 11 substitutes the new calculated value αnew for the previously calculated value αold and updates the angle, otherwise, the new calculated value αnew is not updated and the previously calculated value αold continues to be used.

When the vehicle is traveling at low velocity, the vehicle angle changes easily due to the effect of the suspension caused by repeated acceleration and deceleration, however, when the vehicle is traveling at high velocity the vehicle angle has a tendency not to change easily, so for example, when it is presumed that the vehicle is traveling at low velocity and the first comparison means 3 compares the value |Ax² + Az² - g²| with T1, even when it is determined that 0 < |Ax² + Az² - g²| < T1, it is thought that there is a high possibility that the result is caused by the angle of the vehicle and not the effect of the road-surface angle α, so by way of the judgment of the fifth comparison means 13, the angle-update means 11 decides from the judgment by the first comparison means 3 whether or not to use the new calculated value αnew (whether or not to update the road-surface angle α).

Similarly, the second comparison means 6 compares the standard deviation of Ax with T2 for each velocity range, and the second comparison means 6 determines whether or not the standard deviation of Ax is less than T2, and when it determines that the standard deviation of Ax is less, the angle-update means 11 substitutes the new calculated value αnew for the previously calculated value αold and updates the angle, otherwise, the new calculated value αnew is not updated and the previously calculated value αold continues to be used. Here as well, when it is presumed that the vehicle is traveling at low velocity, even though the second comparison means 6 determines that the standard deviation of Ax < T2, it is thought that there is a possibility that it is due to acceleration or deceleration of the vehicle, so by way of the judgment of the fifth comparison means 13, the angle-update means 11 decides from the judgment by the second comparison means 6 whether or not to use the new calculated value αnew (whether or not to update the road-surface angle α).

The third comparison means 7 performs comparison for each velocity range of whether or not the condition of when 0 < |Ax² + Az² - g²| < T1 and the condition of when the standard deviation of Ax < T2 continues for a set amount of time T3, and when the third comparison means 7 determines that the judgment time by the first comparison means 3 and the second comparison means 6 exceeds T3, then the angle-update means 11 substitutes the new calculated value αnew for the previously calculated value αold and updates the angle, otherwise, the new calculated value αnew is not updated and the previously calculated value αold continues to be used.

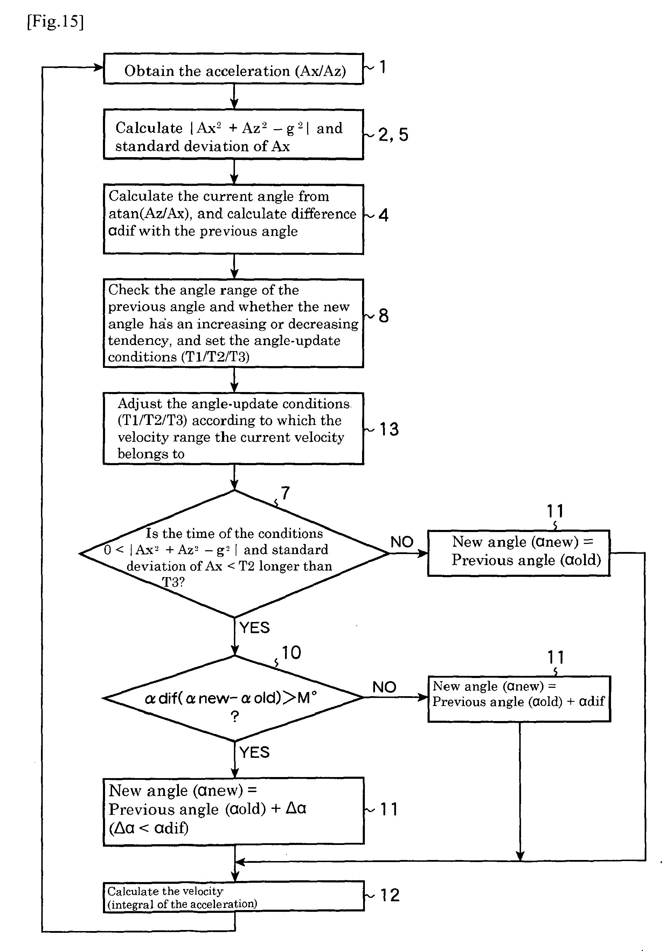

Fig. 15 shows an example of the operation steps of the road-surface-angle-calculation apparatus shown in Fig. 6. Here, using the acceleration information Ax, Az obtained from the acceleration sensor 1, the first calculation means 2 calculates the value |Ax² + Az² - g²| at each time, and the second calculation means 5 calculates the standard deviation of Ax. On the other hand, the angle-calculation means 4 calculates the road-surface angle α at each time, and calculates the difference αdif between the new calculated value αnew and the previously calculated valueαold (αnew - αold) (°).

The fourth comparison means 8 determines which of the angle ranges shown in Fig. 16 that the previously calculated value (old road-surface angle) αoldbelongs to, and from the difference αdif between the new calculated value αnew and the previously calculated value αold, determines whether or not the absolute value of the new calculated value αnew is increasing, and when it is not increasing, the fifth comparison means 13 determines which velocity range, low velocity, medium velocity or high velocity, that the vehicle velocity calculated by the velocity-calculation means 12 belongs to. Here, for example, when it is determined that the vehicle velocity belongs to either the medium velocity or high velocity range, the third comparison means 7 further determines whether or not the condition of when 0 < |Ax² + Az² - g²| < T1 and the condition of when the standard deviation of Ax < T2 continues for the set amount of time T3. When the absolute value of the new calculated value αnew is increasing, then there is a high possibility that error is included as described above, so operation does not continue after that.

When the third comparison means 7 determines that the judgment time is less than T3, the new calculated value αnew is not updated and the previously calculated value αold continues to be used, and when it determines that the judgment time is greater than T3, the angle-comparisonmeans 10 further determines whether or not the difference αdif (αnew-αold) between the new calculated value αnew and the previously calculated value αold is greater than a certain set value M° ((̵ N°).

When the angle-comparison mean 10 determines that the differenceαdif of the calculated values is less than the set value M°, the angle-update means 11 updates the previously calculated value αold with a value obtained by adding the difference to the previously calculated value (αold + αdif) as the new calculated value αnew. When the angle-comparison means 10 determines that the difference αdif of the calculated values is greater than M°, calculates a value obtained by adding a value Δα (1°to 2°), which sufficiently less than the difference αdif between the new calculated value αnew and the previously calculated value αold, to the previously calculated value αold (αold + Δα) as the new calculated value αnew after update, and updates the previously calculated value αold. The velocity-calculation means 12 newly calculates the vehicle velocity Vn based on the new calculated value αnew after update.

### [Explanation of the Reference Numbers]

- 1: Acceleration sensor
- 2: First calculation means
- 3: First comparison means
- 4: Angle-calculation means
- 5: Second calculation means
- 6: Second comparison means
- 7: Third comparison means
- 8: Fourth comparison means
- 10: Angle-comparison means
- 11: Angle-update means
- 12: Velocity-calculation means
- 13: Fifth comparison means

## Claims

1. A road-surface-angle-calculation apparatus comprising: an angle-calculation means that calculates the road-surface angle from the acceleration component Ax that is parallel to the road surface and the acceleration component Az that is perpendicular to the road surface and that are obtained from an acceleration sensor that is installed in a vehicle; a first calculation means that calculates the value |Ax² + Az² - g²| from the said values Ax and Az and where g is the acceleration due to gravity; and a first comparison means that determines whether or not said value |Ax² + Az² - g²| is positive and is less than a certain set value.

2. A road-surface-angle-calculation apparatus comprising: an angle-calculation means that calculates the road-surface angle from the acceleration component Ax that is parallel to the road surface and the acceleration component Az that is perpendicular to the road surface and that are obtained from an acceleration sensor that is installed in a vehicle; a second calculation means that calculates the square root of the difference of the sum of squares of the average value Axav of a plurality of acceleration components Axn that are parallel with the road surface and stored at each time, and the acceleration component Axn at said each time and that are obtained from said acceleration sensor; and a second comparison means that determines whether or not the standard deviation of Ax obtained by said second calculation means is less than a certain set value.

3. A road-surface-angle-calculation apparatus comprising: an angle-calculation means that calculates the road-surface angle from the acceleration component Ax that is parallel to the road surface and the acceleration component Az that is perpendicular to the road surface and that are obtained from an acceleration sensor that is installed in a vehicle; a first calculation means that calculates the value |Ax² + Az² - g²| from said values Ax andAz, where g is the acceleration due to gravity; a first comparison means that determines whether or not said value |Ax² + Az² - g²| is positive and is less than a certain set value; a second calculation means that calculates the square root of the difference of the sum of squares of the average value Axav of a plurality of acceleration components Axn that are parallel with the road surface and stored at each time, and the acceleration component Axn at said each time and that are obtained from said acceleration sensor; a second comparison means that determines whether or not the standard deviation of Ax obtained by said second calculationmeans is less than a certain set value; and a third comparison means that determines whether or not the time when the first comparison means determines that said value |Ax² + Az² - g²| is positive and is less than a certain set value and the time when the second comparison means determines that said standard deviation of Ax is less than a certain set value is longer than a certain set amount of time.

4. The road-surface-angle-calculation apparatus of any one of the claims 1 to 3 comprising: a fourth comparison means that determines whether or not previously calculated value of the road-surface angle calculated by said angle-calculation means is greater than a certain set value, and whether or not a new calculated value is greater than the previously calculated value; and where at least any one of said first to third comparison means performs judgment according to the judgment results of said fourth comparison means.

5. The road-surface-angle-calculation apparatus of any one of the claims 1 to 4 comprising: an angle-comparison means that determines whether or not the difference between the new calculated value and the previously calculated value that are calculated by said angle-calculation means is greater than a certain set value; and an angle-update means that calculates a value obtained by adding a value, which is sufficiently less than the difference between the new calculated value and previously calculated value, to the previously calculated value as the new calculated value immediately after update when said angle-comparisonmeans determines that the difference is greater than a certain set value.

6. The road-surface-angle-calculation apparatus of claim 5 comprising: a velocity-calculationmeans that calculates the vehicle velocityusing the road-surface angle that was calculated by said angle-update means and the acceleration component Ax that was obtained from the acceleration sensor; and a fifth comparison means that determines which velocity range said vehicle velocity calculated by said velocity-calculation means belongs to when said vehicle velocity is divided into at least the two velocity ranges, low velocity and high velocity; and where at least any one of said first to third comparison means performs judgment according to the judgment results of said fifth comparison means.

7. A road-surface-angle-calculation method comprising: a process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a first calculation means calculates the value |Ax² + Az² - g²| from said values Ax and Az and where g is the acceleration due to gravity; and a process in which a first comparison means determines whether or not said value |Ax² + Az² - g²| is positive and is less than a certain set value.

8. A road-surface-angle-calculation method comprising: a process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a second calculation means calculates the square root of the difference of the sum of squares of the average value Axav of a plurality of acceleration components Axn that are parallel with the road surface and stored at each time, and the acceleration componentAxn at each said time and that are obtained from said acceleration sensor; and a process in which a second comparisonmeans determines whether or not the standard deviation of Ax obtained by said second calculation means is less than a certain set value.

9. A road-surface-angle-calculation method comprising: a process in which an angle-calculation means calculates the road-surface angle from the acceleration component Ax that is parallel to the road surface and the acceleration component Az that is perpendicular to the road surface and that are obtained from an acceleration sensor that is installed in a vehicle; a process in which a first calculation means calculates the value |Ax² + Az² - g²| from said values Ax and Az, where g is the acceleration due to gravity; a process inwhicha first comparison means determines whether or not said value |Ax² + Az² - g²| is positive and is less than a certain set value; a process in which a second calculation means calculates the square root of the difference of the sum of squares of the average value Axav of a plurality of acceleration components Axn that are parallel with the road surface and stored at each time, and the acceleration component Axn at each said time and that are obtained from said acceleration sensor; a process in which a second comparison means determines whether or not the standard deviation of Ax obtained by said second calculation means is less than a certain set value; and a process in which a third comparison means determines whether or not the time when the first comparison means determines that said value |Ax² + Az² - g²| is positive and is less than a certain set value and the time when the second comparison means determines that said standard deviation of Ax is less than a certain set value is longer than a certain set amount of time.

10. The road-surface-angle-calculation method of any one of the claims 7 to 9 comprising: a process in which a fourth comparison means determines whether or not a previously calculated value of the road-surface angle calculated by said angle-calculation means is greater than a certain set value, and whether or not the new calculated value is greater than the previously calculated value; and where at least any one of said first to third comparison means performs judgment according to the judgment results of said fourth comparison means.

11. The road-surface-angle-calculation method of any one of the claims 7 to 10 comprising: a process in which an angle-comparison means determines whether or not the difference between the new calculated value and the previously calculated value that are calculated by said angle-calculation means is greater than a certain set value; and a process in which an angle-update means calculates a value obtained by adding a value, which is sufficiently less than the difference between the new calculated value and previously calculated value, to the previously calculated value as the new calculated value immediately after update when said angle-comparison means determines that the difference is greater than a certain set value.

12. The road-surface-angle-calculation method of claim 11 comprising: a process in which a velocity-calculation means calculates the vehicle velocity using the road-surface angle that was calculated by said angle update means and the acceleration component Ax that was obtained from the acceleration sensor; andaprocess inwhich a fifth comparison means determines which velocity range the vehicle velocity calculated by said velocity-calculation means belongs to when said vehicle velocity is divided into at least the two velocity ranges, low velocity and high velocity; and where at least any one of said first to third comparison means performs judgment according to the judgment results of said fifth comparison means.
